# EUROPEAN PATENT APPLICATION

(11) **EP 2 157 805 A2**
(43) Date of publication of application: **24.02.2010**
(21) Application number: 09167146.1
(22) Date of filing: 04.08.2009
(51) Int. Cl.: H04Q 3/68

(54) **Multiple-protection system and control method in a communication device**

(30) Priority: 20.08.2008 JP 2008211266
(71) Applicant: NEC CORPORATION, Tokyo (JP)
(72) Inventor: Ozaki, Hirokazu, Tokyo (JP)
(74) Representative: Betten & Resch

(57) **Abstract**

A multiple-protection system in a communication device, includes: a plurality of working units (WU1-J); at least one protection unit (2); and a unit controller (3) controlling unit switching from a failed working unit to a protection unit, wherein each of the plurality of working units and the protection unit comprises: a plurality of working circuit modules (12-J-1 to 12-J-n); at least one protection circuit module (13-J-1,13-J-2); and a module controller (14-J) controlling module switching from a failed working circuit module to a protection circuit module, wherein, when module protection cannot be made by the module switching, the unit switching is performed.

## Description

This application is based upon and claims the benefit of priority from Japanese Patent Application No. 2008-211266, filed on August 20, 2008, the disclosure of which is incorporated herein in its entirety by reference.

The present invention relates to a communication device with redundant system, and in particular to a protection system for higher reliability of communication lines.

Nowadays, when the Internet has become a social infrastructure, high reliability of a broadband access line is an issue of great importance. Redundancy is known as an effective method to accomplish higher reliability.

However, redundancy of devices and transmission lines is accompanied by the problem of doubling the device volume, power consumption, and price, and therefore, from the viewpoint of global environment protection as well, the adoption of redundancy has its own intrinsic restrictions. In these respects, a shared protection scheme, typified by 1:N protection scheme, can be said to be more preferred methods for accomplishing higher reliability.

For example, as a method for increasing the reliability of a passive optical network (PON) system, a shared protection system is proposed which is designed with M:N redundancy of PON interface sections (M protection sections and N working sections) (for example, see Japanese Patent Application Unexamined Publication No. 2008-054278). With respect to the reliability of 1:N and 2:N redundancy, mathematical analysis has been made (for example, see Ozaki, H., and Kara, A., "Computing the Availability and MTTF of Shared Protection Systems," IEEE CIT 2007, October 2007).

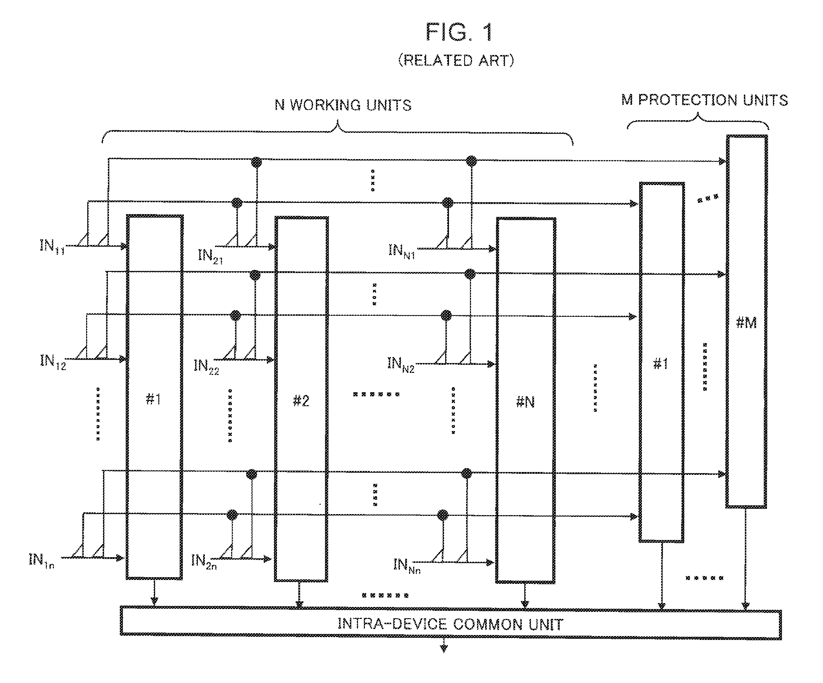

As shown in FIG. 1, it is assumed that a communication device is designed with M:N component redundancy in which M protection units (#1-#M) are provided for N working units (#1-#N). The M protection units and N working units are provided with identical circuit modules. The working units are normally used. When a failure occurs in any one of the working units, an intra-device common unit switches an operation unit from the failure-detected working unit to an available one of the protection units, whereby signal processing is continually performed. For example, in case of M=1, 1:N protection system is provided. In case of M=2, 2:N protection system is provided.

In general, M:N component redundancy has the advantage that a system can be configured with consideration given to a tradeoff between reliability and costs and/or power consumption (that is, appropriate values can be selected for M and N.)

However, M:N component redundancy has a problem as follows. If a large value is selected for M in order to increase reliability, the configuration of the device, particularly the switch section, and its control method become complicated, and the original advantages (low costs and low power consumption) of the M:N component redundancy are lost. Although 2:N component redundancy can achieve higher reliability than 1:N component redundancy, two slots need to be secured for protection units, as well as two switching systems being required to be provided in the communication device. Accordingly, in the case of M:N component redundancy, the configuration is large in scale and complicated, and power consumption is increased. These problems are more significant particularly when a common module in each working and protection unit is large in scale and consumes high power.

Accordingly, an object of the present invention is to provide a multiple-protection system and control method which can solve the above-described problems and can achieve high reliability while keeping the device configuration simple and small in size and also keeping the control method uncomplicated.

According to the present invention, a multiple-protection system in a communication device, includes: a plurality of working units; at least one protection unit; and a unit controller controlling unit switching from a failed working unit to a protection unit, wherein each of the plurality of working units and the protection unit comprises: a plurality of working circuit modules; at least one protection circuit module; and a module controller controlling module switching from a failed working circuit module to a protection circuit module, wherein, when module protection cannot be made by the module switching, the unit switching is performed.

According to the present invention, a multiple-protection method in a communication device which comprises a plurality of working units and at least one protection unit, wherein each of the plurality of working units and the protection unit comprises a plurality of working circuit modules and at least one protection circuit module, the method includes: when a module failure is detected, performing module switching from a failed working circuit module to a protection circuit module for module protection within a working unit; when the module protection within the working unit cannot be made by the module switching, performing unit switching from a failed working unit to a protection unit for unit protection.

According to the present invention, with the above-described configuration and operation, the effect can be obtained that it is possible to achieve high reliability while keeping the device configuration simple and small in size and also keeping the control method uncomplicated.
FIG. 1 is a diagram showing a general configuration, of a M:N shared protection device.
FIG. 2 is a block diagram showing the configuration of a multiple-protection system of a communication device according to a first exemplary embodiment of the present invention.
FIG. 3 is a block diagram showing the detailed configuration of a working/protection unit in the multiple-protection system as shown in FIG. 2.
FIG. 4 is a flowchart showing an operational outline of the multiple-protection system according to the first exemplary embodiment of the present invention.
FIGS. 5 to 10 are diagrams showing how switching control is performed in steps according to the first exemplary embodiment of the present invention.
FIG. 11 is a block diagram showing the configuration of a multiple-protection system of a communication device according to a second exemplary embodiment of the present invention.

Next, exemplary embodiments of the present invention will be described with reference to the accompanying drawings. First, a description will be given of the general outline of a multiple-protection system of a communication device according to the present invention. The multiple-protection system is **characterized in that** redundancy of circuit modules in each device unit is nested in redundancy of device units, whereby a highly reliable network node device can be implemented with a simple device configuration and by an uncomplicated control method.

### 1. System configuration

Hereinafter, for simplicity, taking as an example two for n (2:n) protection scheme in each working unit and one for N (1:N) protection scheme in a communication device, a multiple-protection system will be described in detail. The present invention can be also applied to m:n protection scheme in each working unit, where m =< n, m is an integer equal to or greater than 1, and n is an integer greater than 1, and M:N protection system as shown in FIG. 1, where M =< N, M is an integer equal to or greater than 1, and N is an integer greater than 1.

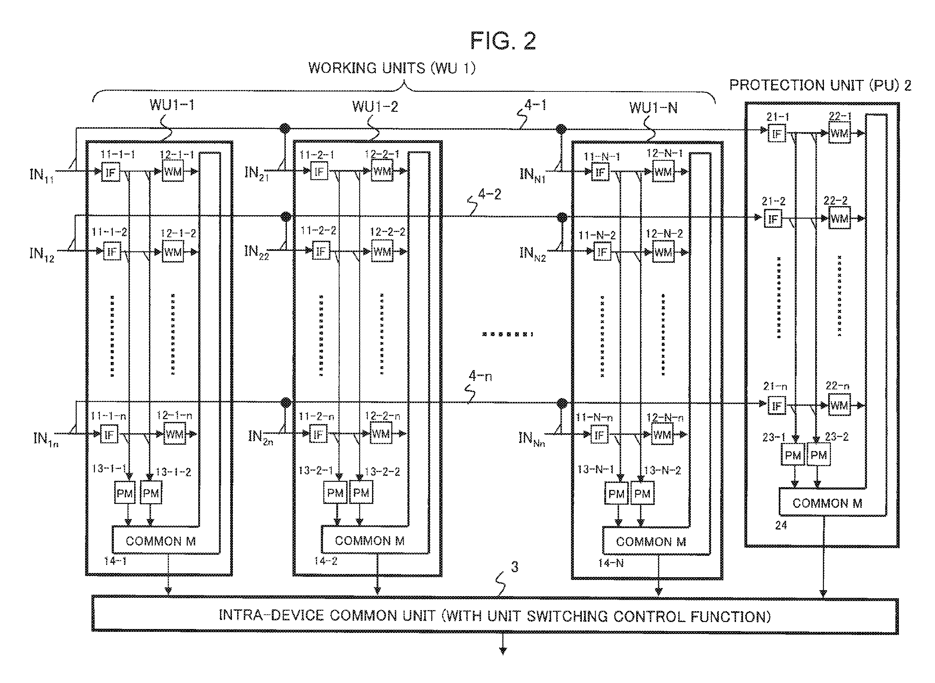

Referring to FIG. 2, the communication device according to a first exemplary embodiment of the present invention has the configuration that working units WU1-1 to WU1-N and protection unit 2 are connected to an intra-device common unit 3. Each of the working units WU1-1 to WU1-N inputs *n* external input signals (IN₁₁-IN₁ₙ, IN₂₁-IN₂ₙ, ··· IN_{N1}- IN_{Nn}) and outputs its output signal to the intra-device common unit 3. The i-th external input signal of each working unit (WU1-1, WU1-2, ... WU1-N) is selectively connected, through a selective switch, to an i-th protection line 4-i (i=1, 2, ... n) which is connected to the protection unit 2. Each of the working units WU1-1 to WU1-N has the same internal circuit as the protection unit 2. To simplify the following description, hereinafter, any one of the working units WU1-1 to WU1-N is denoted by WU1-J (J = 1, 2, ... N).

The working unit WU1-J is provided with input interfaces (IFs) 11-J-1 to 11-J-n to which its *n* external input signals IN_{J1}-IN_{Jn} are input, respectively. The output signals of the input interfaces (IFs) 11-J-1 to 11-J-n are normally connected to working circuit modules 1-2-J-1 to 12-J-n, respectively, and, in case of a failure occurring in a working circuit module, are selectively connected to protection circuit modules 13-J-1 and 13-J-2 through selective switches. The protection circuit modules 13-J-1 and 13-J-2 are the same internal circuit as the working circuit modules 12-J-1 to 12-J-n. After signal processing by these circuit modules (12-J-1 to 12-J-n, 13-J-1 and 13-J-2), the output signals of these circuit modules are processed by a common module 14-J having a module switching control function. The output signal of the common module 14-J is output to an intra-device common unit 3 having a unit switching control function.

As described before, the protection unit 2 has the same circuit as the working unit WU1-J. More specifically, the protection unit 2 is provided with input interfaces (IPs) 21-1 to 21-n, which are connected to the protection lines 4-1 to 4-n, respectively. The output signals of the input interfaces 21-1 to 21-n are normally connected to working circuit modules 22-1 to 22-n, respectively, and, in case of a failure occurring in a working circuit module, are selectively connected to protection circuit modules 23 -1 and 23-2 through selective switches. The protection circuit modules 23-1 and 23-2 are the same internal circuit as the working circuit modules 22-1 to 22-n. After signal processing by these circuit modules (22-1 to 22-n, 23-1 and 23-3), the output signals of these circuit modules are processed by a common module 24 having the module switching control function. The output signal of the common module 24 is output to the intra-device common unit 3.

The infra-device common unit 3 has the unit switching control function of switching between any one of the working units 1-1 to 1-N and the protection unit 2 in case of occurrence of a unit failure.

### 2. Device unit

The detailed internal circuit of each of the working units WU1-1 to WU1-N and the protection unit 2 will be described.

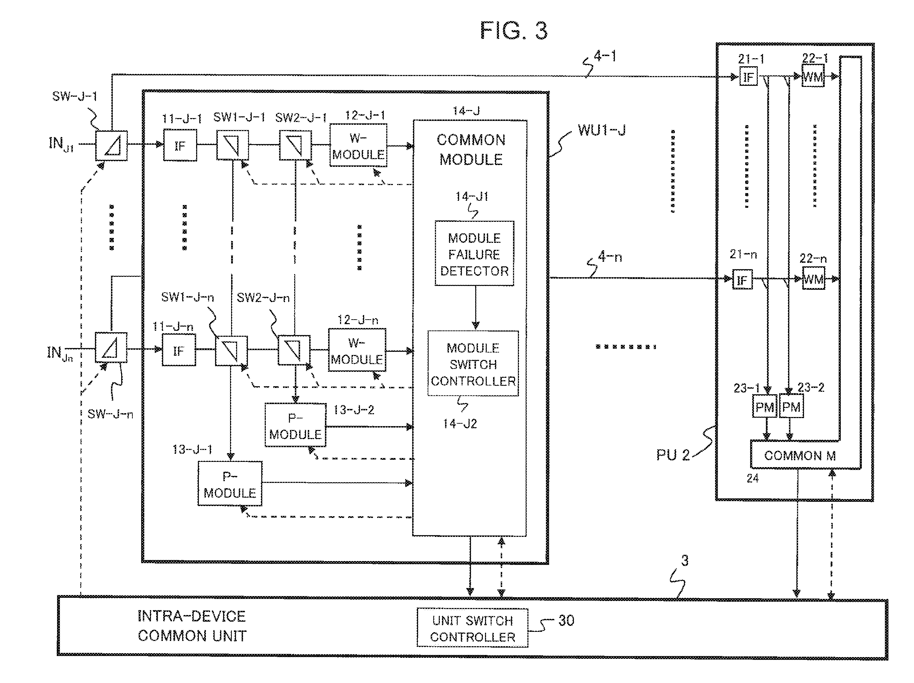

Referring to FIG. 3, the working unit WU1-J is provided with input interfaces 11-J-1 to 11-J-n to which its *n* external input signals IN_{J1}-IN_{Jn} are input through selective switches SW-J-1 to SW-J-n, respectively. The output signal of the input interface 11-J-1 can be selectively connected to the working circuit module 12-J-1 or an available one of the protection modules 13-J-1 and 13-J-2 through selective switches SW1-J-1 and SW2-J-1. After signal processing by the working circuit module 12-J-1 or a selected protection module, the output signal of the working circuit module 1-2-J-1 or the selected protection module is processed by the common module 14-J.

Similarly, the respective output signals of other input interfaces 11-J-2 to 11-J-n can be selectively connected to the corresponding working circuit modules 12-J-2 to 12-J-n or an available one of the protection modules 13-J-1 and 13-J-2 through selective switches SW1-J-2 to SW1-J-n and SW2-J-2 to SW2-J-n. The respective output signals of the working circuit modules 12-J-2 to 12-J-n, which may include selected protection module(s) instead of failed working circuit module(s), are processed by the common module 14-J.

The common unit 14-J functionally includes a module failure detector 14-J1 and a module switch controller 14-J2. The module failure detector 14-J1 monitors the working circuit modules 12-J-1 to 12-J-n and, when detecting a failure in a working circuit module, informs the module switch controller 14-J2 of failure occurrence in the working circuit module and then the module switch controller 14-J2 activates a corresponding selective switch for protection.

For example, when having been informed of failure occurrence in the working circuit module 12-J-1, the module switch controller 14-J2 checks which one of the protection modules 13-J-1 and 13-J-2 is available and powers on the available protection module. Then the module switch controller 14-J2 switches a corresponding one of the selective switches SW1-J-1 and SW2-J-1 from normal position to protection position so as to change a connection of the output signal of the input interface 11-J-1 to the available protection module 13-J-1 or 13-J-2. At the same time, the module switch controller 14-J2 may power off the failed working circuit module.

The internal circuit of the protection unit 2 is the same as that of the working circuit unit WU1-J. In this example, the input interfaces 21-1 to 21-n correspond to the input interfaces 11-J-1 to 11-J-n, the working circuit modules 22-1 to 22-n to the working circuit modules 12-J-1 to 12-J-n, the protection circuit modules 23-1 and 23-2 to the protection circuit modules 13-J-1 and 13-J-2, and the common module 24 to the common module 14-J, respectively.

In this manner, up to two module failures in each of the working circuit units WU1-1 to WU1-n and the protection unit 2 can be restored. However, if further failures occur in a single working circuit unit, then the common module 14-J informs the intra-device common unit 3 of occurrence of unit failure. The intra-device common unit 3 functionally includes a unit switch controller 30. When having been informed of failure occurrence of the working unit, the unit switch controller 30 activates the selective switches to switch unit operation from the failed working circuit unit to the protection circuit unit 2. For example, assuming that the working circuit unit WU1-J falls into unit failure, the intra-device common unit 3 switches the selective switches SW-J-1 to SW-J-n from normal position to protection position, so that the *n* external input signals IN_{J1}-IN_{Jn} are transferred directly to the protection unit 2 through the protection line 4-1 to 4-n. The intra-device common unit 3 may power off the failed working circuit unit WU1-J. In this manner, the protection unit 2 operates instead of the failed working circuit unit.

As described above, a combination of redundancy of circuit modules in each circuit unit and redundancy of circuit units are employed, resulting in high reliability, simple configuration and uncomplicated control.

### 3. Multiple-protection control

The multiple-protection control is performed by a combination of the common module 14-J of each working unit WU1-J and the intra-device common unit 3.

Normally, as shown in FIG. 3, the selective switches SW1-J-2 to SM1-J-n and SW2-J-2 to SW2-J-n are set at the normal position to transfer the *n* external input signals IN_{J1}-IN_{Jn} to the working circuit modules 12-J-1 to 12-J-n, respectively. The respective working circuit modules 12-J-1 to 12-J-n perform signal processing of the *n* external input signals IN_{J1}-IN_{Jn} and output processed signals to the common module 14-J.

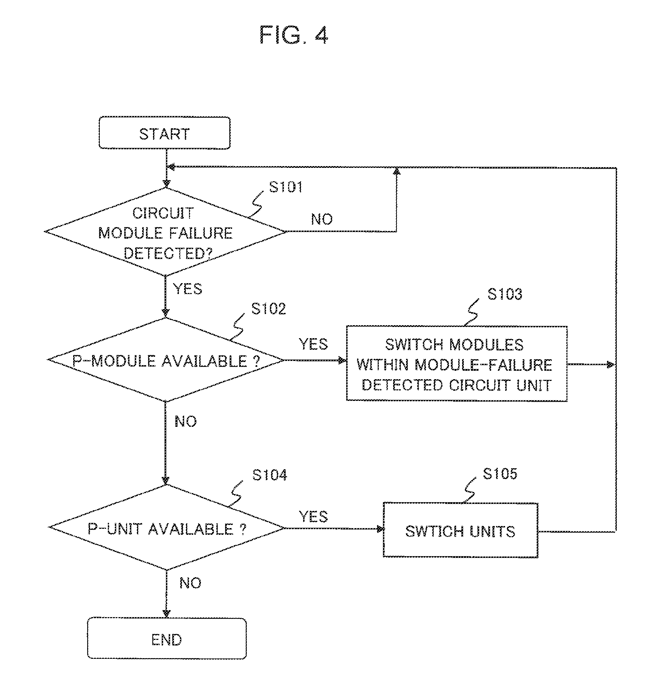

Referring to FIG. 4, the module failure detector 14-J1 of the common module 14-J monitors the output signals of the working circuit modules 12-J-1 to 12-J-n to check whether a circuit module failure occurs (Step S101).

When a failure is detected in any one (i-th) of the working circuit modules 12-J-1 to 12-J-n (Step S101: YES), the module switch controller 14-J2 of the common module 14-J checks whether at least one of the protection modules 13-J-1 and 13-J-2 is available (Step S102). When a protection module is available (Step S102: YES), the module switch controller 14-J2 activates a corresponding one of the selective switches SW1-J-i and SW2-J-1 to separate the failed working circuit module 12-J-i and connect a corresponding external input signal IN_{Ji} to an available protection module, so that signal processing of the corresponding external input signal IN_{Ji} is performed by an available one of the protection circuit modules 13-J-1 and 13-J-2, instead of the failed working circuit module 12-J-i (Step S103).

However, this protection module processing (Step S102 and Step S103) is allowed only when at least one protection circuit module operates normally and is not in use. When all of the protection circuit modules 13-J-1 and 13-J-2 fail or are in use (Step S102: NO), the common module 14-J notifies the intra-device common unit 3 of a unit failure.

When receiving the unit failure from the common module 14-J of the working circuit module WU1-J, the unit switch controller 30 of the intra-device common unit 3 checks whether the protection unit 2 is available (Step S104). When the protection unit 2 is available (Step S104: YES), the unit switch controller 30 activates the selective switches SW-J-1 to SW-J-n so that switching to the protection unit 2 (unit switching) is performed (Step S105).

However, also this protection unit processing (Step S104 and Step S105) is allowed only when the protection unit 2 operates normally and is not in use. As described before, the protection unit 2 also has the protection circuit modules 23-1 and 23-2. Accordingly, if a failure occurs in the working circuit modules 22-1 to 22-n, then switching is performed within the protection unit 2, whereby signal processing can be continually performed. Actually, after the unit switching (Step S105), the failed working unit is repaired or replaced with a new one and then the unit operation is switched from the protection unit 2 to the repaired or new working unit, so that the signal processing is continued normally.

As described above, according to the present exemplary embodiment, multiple-protection switching control in two steps is performed. Specifically, when a circuit module fails within a unit, module switching is performed first within the unit, thereby protecting the signal processing. Then, only when this protection within the unit is impossible, unit switching to the protection unit 2 is performed. In other words, the module protection has precedence over the unit protection.

The above-described module protection may be implemented by programs running on a program-controlled processor in each of working and protection circuit modules. The above-described unit protection may be implemented by programs running on a program-controlled processor in each of working and protection units.

### 4. Example

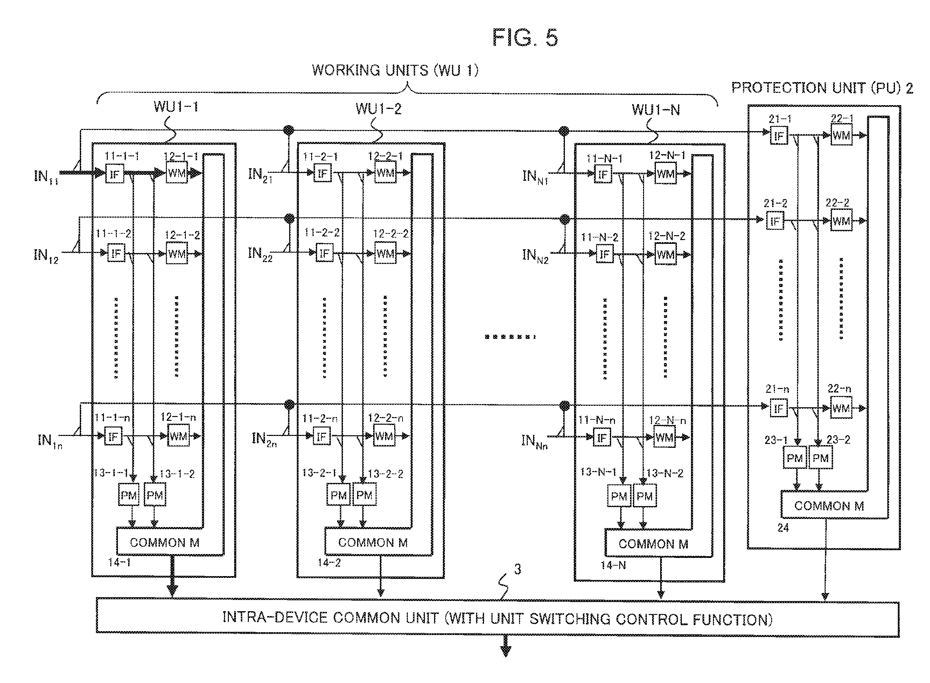

With reference to FIGS. 5 to 10, a description will be given, as an example, of the switching control performed in steps, with attention directed to an external input signal IN₁₁ input to a first port of the working unit WU1-1.

FIG. 5 shows a case where no failure occurs. In this example, signal processing is performed by the working circuit module 12-1-1.

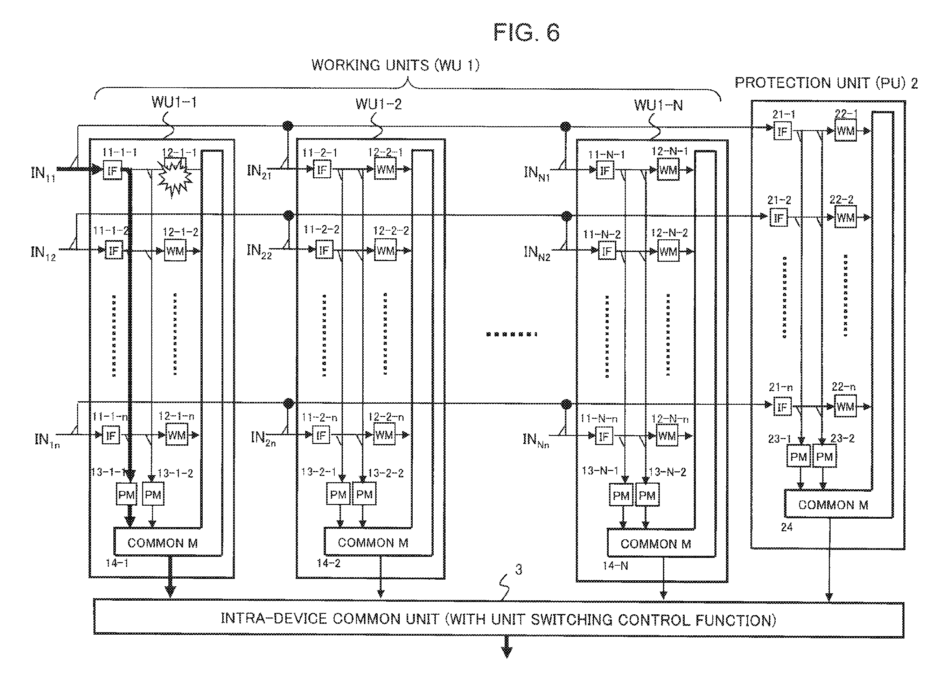

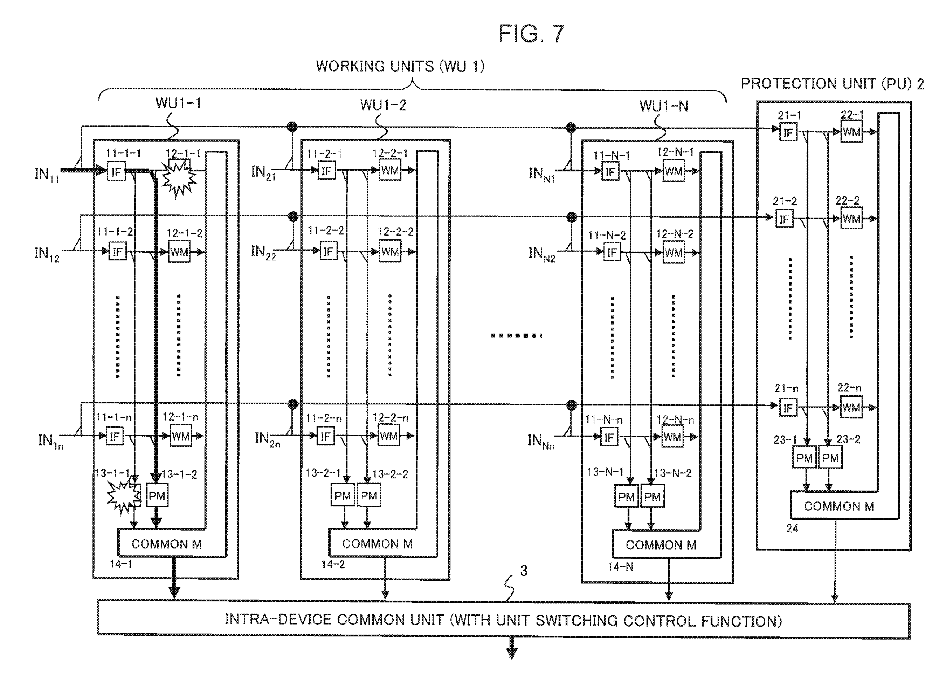

When the working circuit module 12-1-1 fails, module switching is performed within the working unit WU1-1, so that signal processing is performed by the first protection circuit module 13-1-1 as shown in FIG. 6. If the first protection circuit module 13-1-1 is in use or fails, the second protection circuit module 13-1-2 is used, which is shown in FIG. 7.

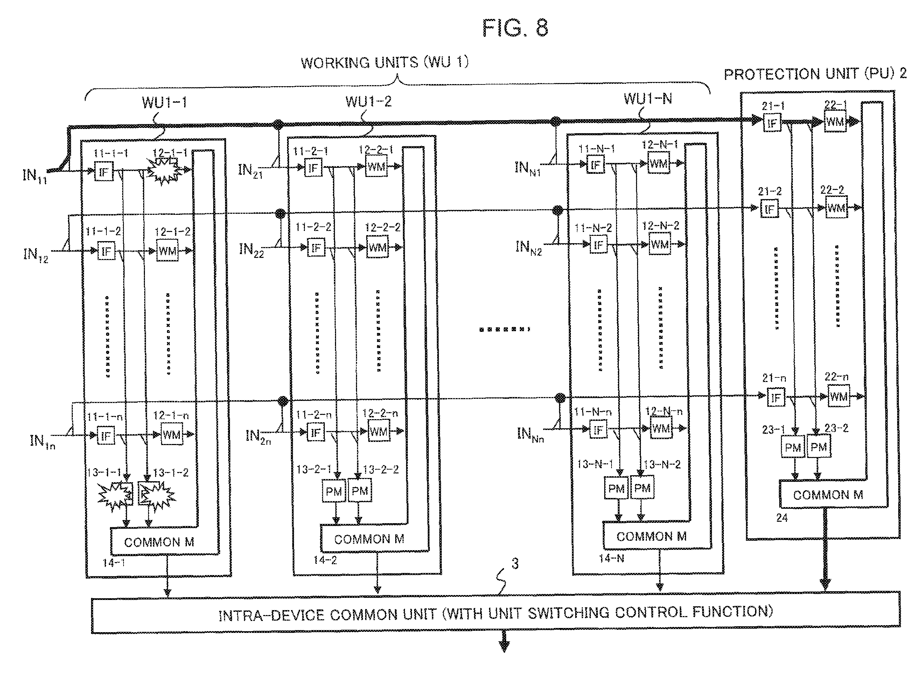

When both of the protection circuit modules 13-1-1 and 13-1-2 are in use or fail, unit switching to the protection unit 2 is performed, so that signal processing is performed by the working circuit module 22-1 in the protection unit 2, which is shown in FIG. 8.

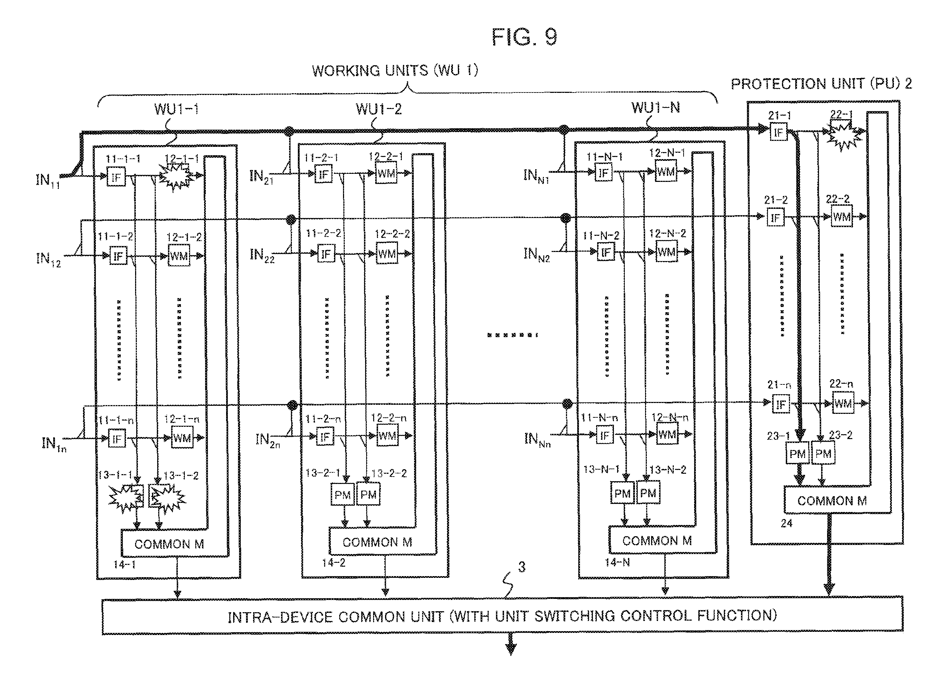

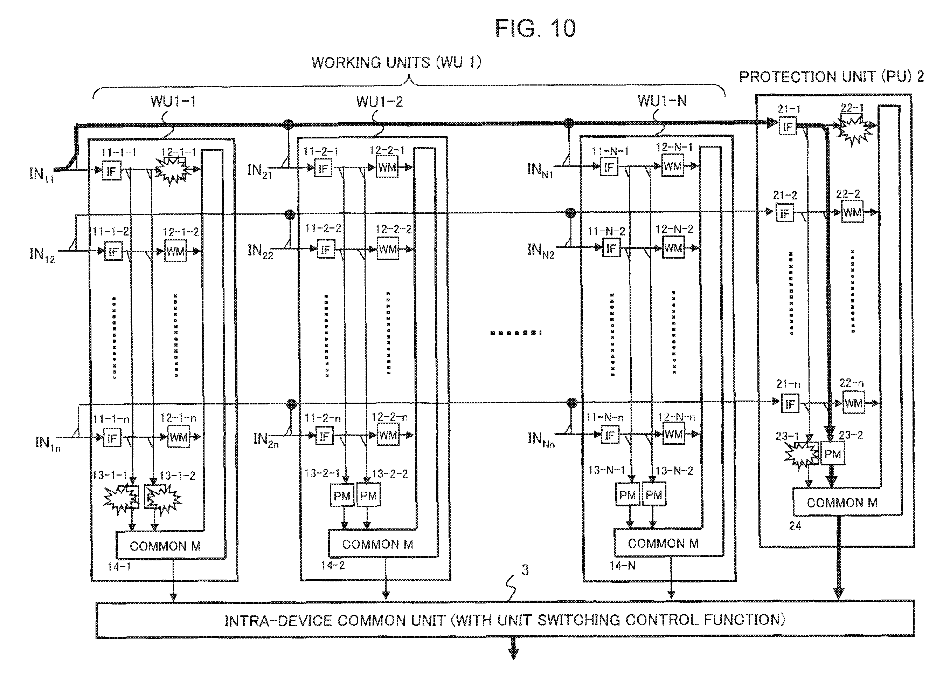

When the working circuit module 22-1 in the protection unit 2 fails, the first protection circuit module 23-1, or the second protection circuit module 23-2 if the first one is in use or fails, in the protection unit 2 is used. This is shown in FIGS. 9 and 10.

To reduce power consumption, in a case where a configuration is made such that no power is supplied to unused ones of the protection circuit modules and protection component, it is necessary to supply the protection circuit module or protection unit with power to check normality before switching.

The redundancy of the circuit modules closed within a unit is non-repairable system redundancy. That is, even when switching is performed within a unit due to the occurrence of a failure, there is no need to perform replacement or repair immediately. When a failure cannot be handled by the redundancy within the unit, unit switching is performed, and replacement or repair of the unit is made.

### 5. Advantages

In such a manner, the multiple-redundancy scheme for circuit modules and device units according to the present exemplary embodiment can solve the problems described earlier and achieve high reliability while keeping the device configuration simple and small in size and also keeping the control uncomplicated.

As described above, in the multiple-redundancy scheme for circuit modules and device units according to the present exemplary embodiment, non-repairable module redundancy is adopted within each device unit of the communication device, which is embedded in repairable unit redundancy (protection unit 2). Thereby, the effect can be obtained that, while keeping high reliability, it is possible to reduce the volume of the protection unit 2 taking a share of the entire device, as well as to reduce the device size and power consumption.

This effect is more significant particularly when the common module 24 in the protection unit 2 has a large dimension and consumes high power. Moreover, according to the present exemplary embodiment, the higher-density device can be made by allocating the reduced volume of the protection unit 2 to a working unit. More specifically, a working slot is implemented in place for the slot for protection unit made available, whereby higher density can be accomplished.

In addition, the present exemplary embodiment also has the effect that lower power consumption of the entire system can be accomplished by making a configuration such that no power is supplied to unused ones of the protection circuit modules and protection component.

### 6. Another exemplary embodiment

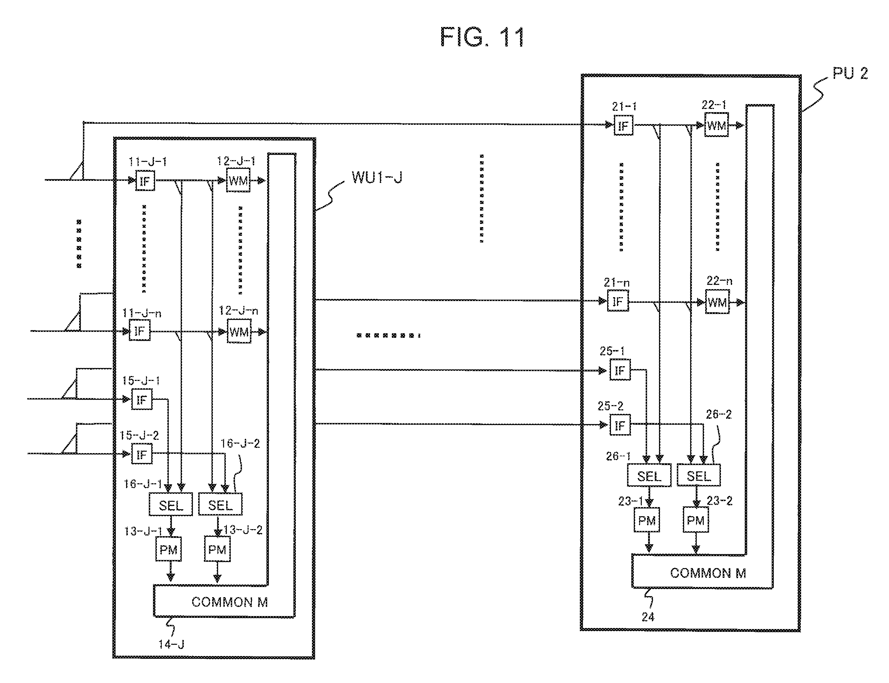

FIG. 11 is a block diagram showing an example of the configuration of a communication device according to a second exemplary embodiment of the present invention. Like this configuration according to the second exemplary embodiment of the present invention shown in FIG. 11, it is also possible to make a configuration such that protection circuit modules 13-J-1 and 13-J-2 are provided as options and allowed to serve as working circuit modules by using selectors 16-J-1 and 16-J-2 so that all circuit modules are used as working circuit modules.

More specifically, each of the selectors 16-J-1 and 16-J-2, controlled by the common module 14-J, selects one of a transferred external input signal for a failed working circuit module and an original external input signal received from a corresponding one of interfaces 15-J-1 and 15-J-2. Accordingly, when the selector selects the original external, the corresponding protection circuit module serves as a working circuit module. It is the same with the protection unit 2 such that protection circuit modules 23-1 and 23-2 are provided as options and allowed to serve as working circuit modules by using selectors 26-1 and 26-2 so that all circuit modules are used as working circuit modules. Therefore a description will be provided for a working unit.

As described above, according to the present exemplary embodiment, the use of the protection circuit modules 13-1 and 13-2 are made optional. Thereby, the effect can be obtained that a flexible device configuration can be made with consideration given to the required number of lines to be accommodated and reliability. Since the module switching between circuit modules is performed according to closed control within a unit, the effect is also obtained that the present invention can be applied only by revising a unit, without changing a communication device.

The above-described module protection and unit protection according to the second exemplary embodiment may be implemented by programs running on program-controlled processors in each circuit module and each unit.

According to the present invention, it is also possible to make a configuration such that no power is supplied to unused ones of the protection circuit modules and protection unit, in order to reduce power consumption.

Moreover, it is also possible to make a configuration such that a unit to which the circuit module redundancy according to the present invention is applied and a unit to which such redundancy is not applied are provided in a coexistent manner and that component switching is performed.

The redundancy of circuit modules can also be accomplished within a single integrated circuit or across a plurality of coupled integrated circuits. Although shown in the above-described examples is a configuration provided with two protection circuit modules per unit and one protection unit, it is also possible to make a configuration with any number of protection modules and any number of protection units.

The present invention may be embodied in other specific forms without departing from the spirit or essential characteristics thereof. The above-described exemplary embodiment and examples are therefore to be considered in all respects as illustrative and not restrictive, the scope of the invention being indicated by the appended claims rather than by the foregoing description, and all changes which come within the meaning and range of equivalency of the claims are therefore intended to be embraced therein.

## Claims

1. A multiple-protection system in a communication device, comprising:
a plurality of working units (WU1-J);
at least one protection unit (2); and
a unit controller (3) controlling unit switching from a failed working unit to a protection unit,
**characterized in that**
each of the plurality of working units and the protection unit comprises:
a plurality of working circuit modules (12-J-1 to 12-J-n);
at least one protection circuit module (13-J-1, 13-J-2); and
a module controller (14-J) controlling module switching from a failed working circuit module to a protection circuit module,
wherein, when module protection cannot be made by the module switching, the unit switching is performed.

2. The multiple-protection system according to claim 1, wherein the module controller powers off a working circuit module or a protection circuit module which is not used and the unit controller powers off a working unit or a protection unit which is not used.

3. The multiple-protection system according to claim 2, wherein, when an unused working circuit module or a unused protection circuit module is used, the module controller powers on the unused working circuit module or the unused protection circuit module to check normality before module switching, wherein, when an unused working unit or a unused protection unit is used, the unit controller powers on the unused working unit or the unused protection unit to check normality before unit switching.

4. The multiple-protection system according to any one of claims 1-3, wherein each of the plurality of working units and the protection unit further comprises:
a selector provided for each protection circuit module, wherein the selector selects one of a first external input signal for the failed working circuit module and a second external input signal originally provided to a corresponding protection circuit module to output a selected input signal to the corresponding protection circuit module.

5. A communication device comprising the multiple-protection system according to any one of claims 1 to 4.

6. A multiple-protection method in a communication device which comprises a plurality of working units and at least one protection unit, wherein each of the plurality of working units and the protection unit comprises a plurality of working circuit modules and at least one protection circuit module, **characterized by**:
when a module failure is detected, performing module switching from a failed working circuit module to a protection circuit module for module protection within a working unit;
when the module protection within the working unit cannot be made by the module switching, performing unit switching from a failed working unit to a protection unit for unit protection.

7. The multiple-protection method according to claim 6, wherein a working circuit module or a protection circuit module which is not used is powered off and a working unit or a protection unit which is not used is powered off.

8. The multiple-protection method according to claim 7, wherein, when an unused working circuit module or a unused protection circuit module is used, the unused working circuit module or the unused protection circuit module is powered on to check normality before module switching, wherein, when an unused working unit or a unused protection unit is used, the unused working unit or the unused protection unit is powered on to check normality before unit switching.

9. The multiple-protection method according to any one of claims 6-8, further comprising:
at each of the plurality of working units and the protection unit,
selecting one of a first external input signal for the failed working circuit module and a second external input signal originally provided to a corresponding protection circuit module to output a selected input signal to the corresponding protection circuit module.

10. A recording medium storing a program which instructs a computer to perform multiple-protection in a communication device which comprises a plurality of working units and at least one protection unit, wherein each of the plurality of working units and the protection unit comprises a plurality of working circuit modules and at least one protection circuit module, the program comprising:
when a module failure is detected, performing module switching from a failed working circuit module to a protection circuit module for module protection within a working unit;
when the module protection within the working unit cannot be made by the module switching, performing unit switching from a failed working unit to a protection unit for unit protection.
